# EUROPEAN PATENT APPLICATION

(11) **EP 4 726 975 A1**
(43) Date of publication of application: **15.04.2026**
(21) Application number: 25207915.7
(22) Date of filing: 10.10.2025
(51) Int. Cl.: H02K 5/173, H02K 9/22, H02K 9/06

(54) **SYSTEM HAVING A BEARING COOLING CAPABILITIES**

(30) Priority: 13.10.2024 IL 31633524
(71) Applicant: Ampera Ltd, 8488949 Be'er Sheva (IL)
(72) Inventor: Perets, Moti, BE'ER SHEVA (IL); Aharon, Hagai, BE'ER SHEVA (IL)
(74) Representative: Herrero & Asociados, S.L.

(57) **Abstract**

There is provided a system having a bearing cooling capabilities, that includes a shaft, a vertical electrical motor that is configured to rotate the shaft, a housing including a first housing portion that surrounds the motor bearing , a motor bearing that includes a stationary outer ring and a rotating inner ring that is mechanically coupled to the shaft, an external heat dissipation element that is positioned outside the first housing portion, and heat pipes that are positioned between the stationary outer ring and the external heat dissipation element, wherein each heat pipe comprises an evaporator portion that is thermally coupled to the stationary outer ring and a condenser portion that is thermally coupled to the external heat dissipation element.

## Description

### BACKGROUND OF THE INVENTION

Vertical electrical motors are widely used in various industrial applications due to their compact design and efficient performance. These motors are often preferred in scenarios where space constraints are a significant concern, such as in pumps, compressors, and other machinery that require a vertical orientation. However, one of the critical challenges associated with vertical electrical motors is the effective management of heat generated during operation.

The rotation of the motor shaft generates significant heat, particularly in the motor bearings, which can lead to overheating and potential failure if not adequately managed. Traditional cooling methods, such as air or liquid cooling, may not always be sufficient or feasible, especially in environments with limited space or specific operational requirements. Therefore, there is a continuous need for innovative cooling solutions that can efficiently dissipate heat from the motor bearings to ensure reliable and long-term operation of vertical electrical motors.

### SUMMARY

There are provided methods, non-transitory computer readable media and computerized systems as illustrated in the specification.

### BRIEF DESCRIPTION OF THE DRAWINGS

The subject matter that is regarded as the invention is particularly pointed out and distinctly claimed in the concluding portion of the specification. The invention , however , both as to organization and method of operation , together with objects , features , and advantages thereof , may best be understood by reference to the following detailed description when read with the accompanying drawing in which:
FIG. 1 illustrates an example of a cross sectional view of a system;
FIG. 2 illustrates an example of a heat sink, a motor bearing, heat pipes, an external heat dissipation element and an internal heat dissipation element of the system of figure 1;
FIG. 3 illustrates an example of a heat pipe and of a heat sink, a motor bearing, heat pipes, an external heat dissipation element and an internal heat dissipation element of the system of figure 1;
FIG. 4 illustrates an example of a stator, a rotor, a shaft, a heat sink, a motor bearing, heat pipes, an external heat dissipation element and an internal heat dissipation element of the system of figure 1; and
FIG. 5 illustrates an example of a method.

### DETAILED DESCRIPTION OF THE DRAWINGS

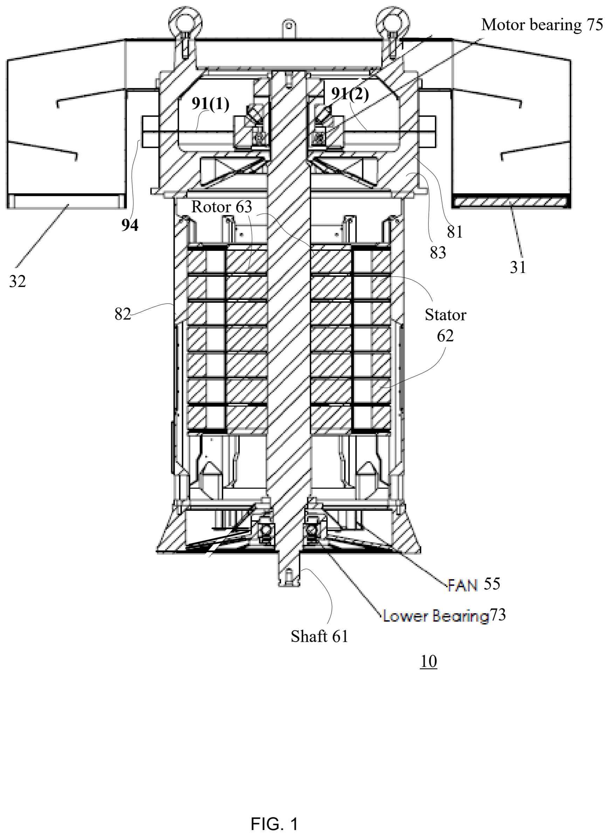

Figure 1 illustrates an example of a cross sectional view of a system.

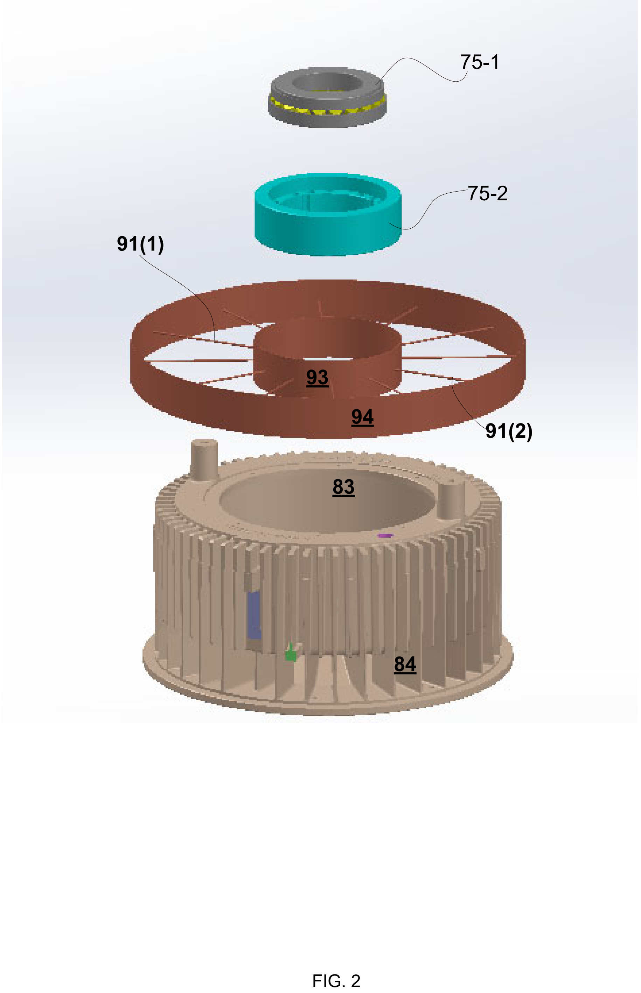

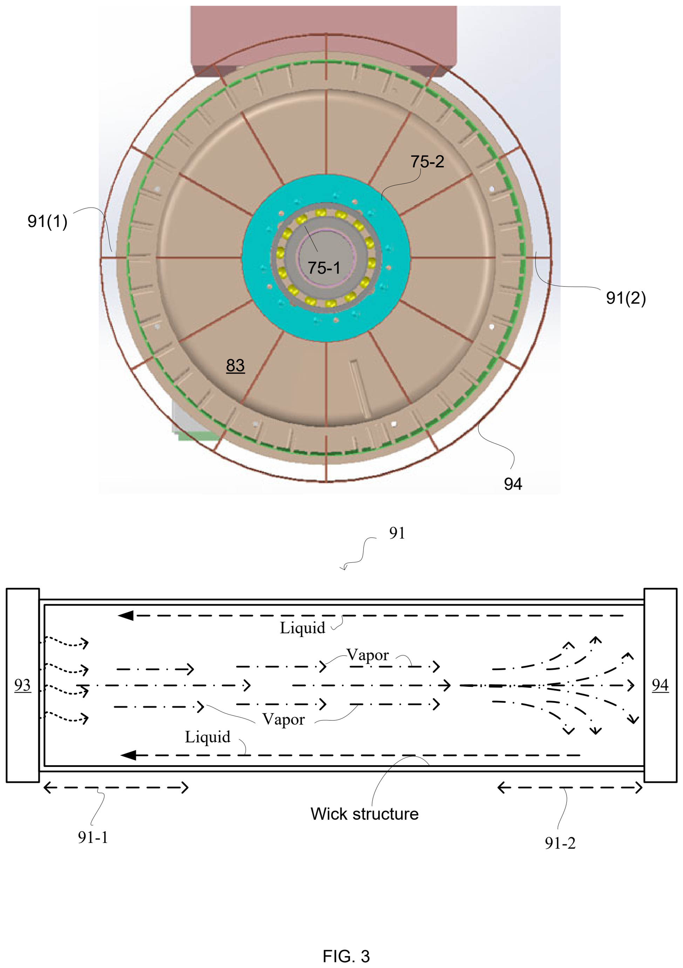

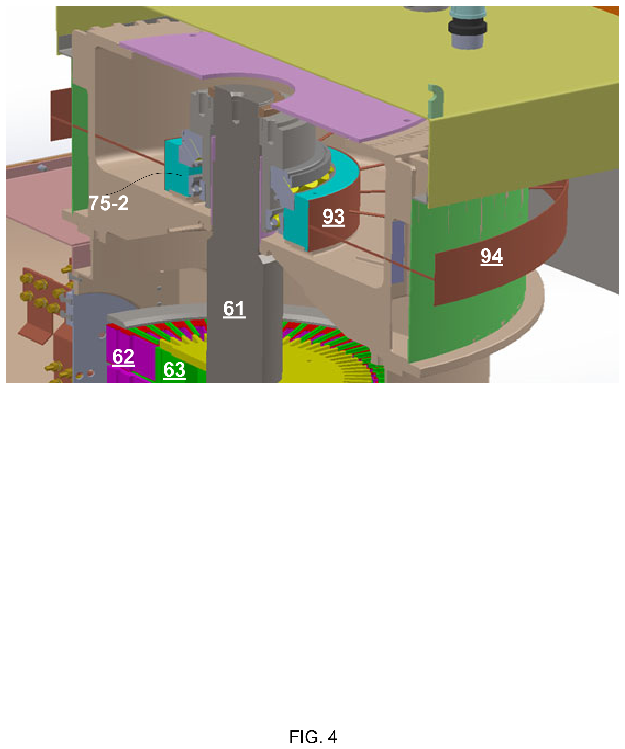

Figures 2-4 illustrates various components of the system of figure 1 - such as heat sink 84 having cooling fins 84, motor bearing 75 including an inner rotating ring 75-1 and stationary outer ring 75-2, heat pipes (denoted 91, 91(1) and 91(2)), external heat dissipation element 94, internal heat dissipation element 93, a vertical electrical motor including rotor 63 and stator 62, shaft 61 rotatable by the vertical electrical motor, air inlets 31 and 32, housing including first portion 81 and second portion 82, fan 55, and lower bearing 73.

In accordance with embodiments , a system having a bearing cooling capabilities, the system includes (a) a shaft, (b) a vertical electrical motor that is configured to rotate the shaft, (c) a motor bearing that includes a stationary outer ring and a rotating inner ring that is mechanically coupled to the shaft, (d) a housing that includes a first housing portion that surrounds the motor bearing, (e) an external heat dissipation element that is positioned outside the first housing portion, and (f) heat pipes that are positioned between the stationary outer ring and the external heat dissipation element, wherein each heat pipe includes an evaporator portion that is thermally coupled to the stationary outer ring and a condenser portion that is thermally coupled to the external heat dissipation element.

According to an embodiment, the heat pipes radially extend from the stationary outer ring.

According to an embodiment, the heat pipes pass through openings formed in the first housing portion.

According to an embodiment, a number of heat pipes exceeds six.

According to an embodiment, the external heat dissipation element is a ring-shaped thermal conductor.

According to an embodiment, the system includes an internal heat dissipation element that surrounds the stationary outer ring.

According to an embodiment, the internal heat dissipation element is a ring.

According to an embodiment, the internal heat dissipation element is positioned between the stationary outer ring and the heat pipes.

According to an embodiment, the system also includes a heat sink.

According to an embodiment, the heat sink also includes cooling fins.

According to an embodiment, the heat pipe pass through the heat sink.

According to an embodiment, the system also includes an air based vertical electrical motor cooling unit.

According to an embodiment, there is provided a method for cooling a motor bearing, the method includes: (a) rotating a shaft and a rotating inner ring of a motor bearing by a vertical electrical motor, wherein the motor bearing is surrounded by a first housing portion of a housing, wherein the motor bearing further includes a stationary outer ring, wherein the rotating inner ring is mechanically coupled to the shaft, and (b) cooling the motor bearing by heat pipes and an external heat dissipation element that is positioned outside the first housing portion, wherein the heat pipes are positioned between the stationary outer ring and the external heat dissipation element thermal, wherein each heat pipe includes an evaporator portion that is thermally coupled to the stationary outer ring and a condenser portion that is thermally coupled to the external heat dissipation element.

According to an embodiment, the heat pipes radially extend from the stationary outer ring.

According to an embodiment, the heat pipes pass through openings formed in the first housing portion.

According to an embodiment, a number of heat pipes exceeds six.

According to an embodiment, the external heat dissipation element is a ring-shaped thermal conductor.

According to an embodiment, the cooling includes using an internal heat dissipation element that surrounds the stationary outer ring.

According to an embodiment, the internal heat dissipation element is a ring.

According to an embodiment, the internal heat dissipation element is positioned between the stationary outer ring and the heat pipes.

According to an embodiment, the cooling also include using a heat sink.

According to an embodiment, the heat sink also includes cooling fins.

According to an embodiment, the heat pipe pass through the heat sink.

According to an embodiment, the method also includes cooling the vertical electrical motor using an air based vertical electrical motor cooling unit.

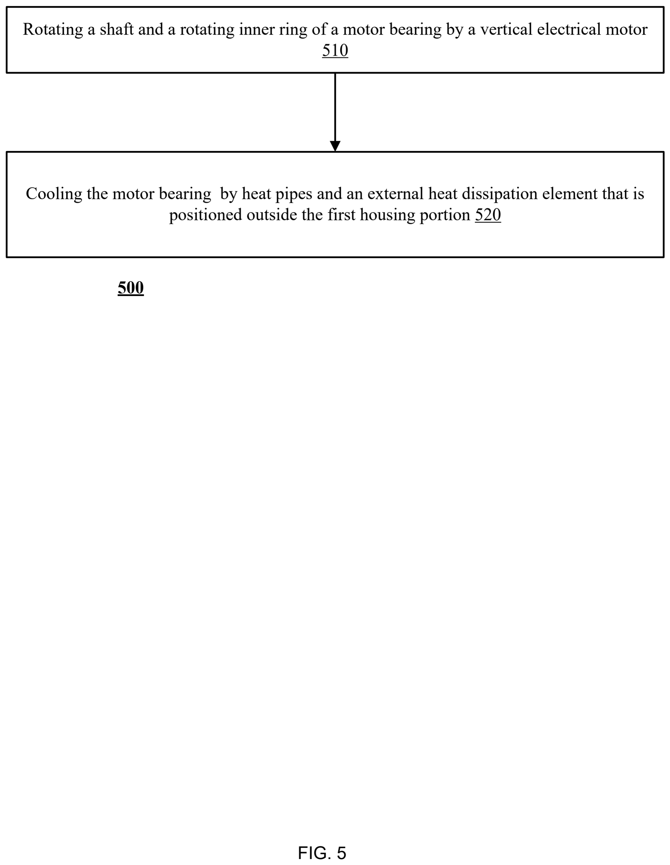

Figure 5 illustrates an example of method 500 that includes steps 510 and 520.

According to an embodiment, step 510 includes rotating a shaft and a rotating inner ring of a motor bearing by a vertical electrical motor. The vertical electrical motor is configured to rotate the shaft, which in turn heats the motor bearing. This heating effect is a direct consequence of the mechanical energy being converted into thermal energy due to friction and other factors during the rotation process.

The motor bearing also includes a stationary outer ring. The rotating inner ring is mechanically coupled to the shaft.

The vertical electrical motor includes a motor bearing that is heated due to the rotation of the shaft by the vertical electrical motor. The vertical electrical motor rotates the shaft, which causes the motor bearing to heat up. The bearing is cooled using heat pipes (see step 520). The heat pipes are positioned between the stationary outer ring and the external heat dissipation element. Each heat pipe includes an evaporator portion that is thermally coupled to the stationary outer ring and a condenser portion that is thermally coupled to the external heat dissipation element.

According to an embodiment, the heat pipes radially extend from the stationary outer ring and pass through openings formed in the first housing portion.

According to an embodiment, there may be any number of heat pipes - for example one, two, three, four, five, six, seven, eight, then or more than ten.

According to an embodiment, the external heat dissipation element is a ring-shaped thermal conductor.

According to an embodiment, the motor bearing is surrounded by a first housing portion of a housing.

According to an embodiment, a second housing portion encloses the vertical electrical motor, providing a protective and structural enclosure. This configuration ensures that the vertical electrical motor operates within a defined space, which is necessary for maintaining the integrity and efficiency of the motor's operation.

According to an embodiment, the system includes an internal heat dissipation element that surrounds the stationary outer ring.

According to an embodiment, the internal heat dissipation element is a ring.

According to an embodiment, the internal heat dissipation element is positioned between the stationary outer ring and the heat pipes.

According to an embodiment, the system also includes a heat sink.

According to an embodiment, the heat sink also includes cooling fins.

According to an embodiment, the heat pipe pass through the heat sink.

According to an embodiment, step 520 includes cooling the motor bearing by heat pipes and an external heat dissipation element that is positioned outside the first housing portion.

According to an embodiment, step 520 includes using an internal heat dissipation element that surrounds the stationary outer ring. Especially - the internal heat dissipation element absorbs heat emitted from the motor bearing (for example from an entirety (or from any defined portion) of the exterior of the motor bearing and conveys at least some of this heat to the heat pipes.

According to an embodiment, the internal heat dissipation element is a ring.

According to an embodiment, the internal heat dissipation element is positioned between the stationary outer ring and the heat pipes.

According to an embodiment, the cooling also include using a heat sink - to convey heat received by the heat sink.

According to an embodiment, the heat sink also includes cooling fins.

According to an embodiment, the heat pipe pass through the heat sink.

According to an embodiment, method 500 also include step 530 of cooling the vertical electrical motor using an air-based vertical electrical motor cooling unit. The air-based vertical electrical motor cooling unit is an additional component specifically designed to enhance the cooling efficiency of the vertical electrical motor. According to an embodiment, the shaft rotates a fan that caused air to pass through one or more air inlets of the system and pass through the vertical electrical motor.

This air-based vertical electrical motor cooling unit is for maintaining the optimal operating temperature of the motor, thereby ensuring its longevity and performance. This integrated cooling system ensures that the motor operates within safe temperature limits, thereby preventing overheating and potential damage. The inclusion of the air-based cooling unit highlights the system's design, aimed at maintaining the motor's performance and reliability under various operating conditions.

In the foregoing detailed description , numerous specific details are set forth in order to provide a thorough understanding of the invention. However , it will be understood by those skilled in the art that the present invention may be practiced without these specific details. In other instances , well-known methods , procedures , and components have not been described in detail so as not to obscure the present invention.

The subject matter regarded as the invention is particularly pointed out and distinctly claimed in the concluding portion of the specification. The invention , however , both as to organization and method of operation , together with objects , features , and advantages thereof , may best be understood by reference to the following detailed description when read with the accompanying drawings.

It will be appreciated that for simplicity and clarity of illustration , elements shown in the figures have not necessarily been drawn to scale. For example , the dimensions of some of the elements may be exaggerated relative to other elements for clarity. Further , where considered appropriate , reference numerals may be repeated among the figures to indicate corresponding or analogous elements.

Because the illustrated embodiments of the present invention may for the most part , be implemented using microelectronics and/or optical components and circuits known to those skilled in the art , details will not be explained in any greater extent than that considered necessary as illustrated above , for the understanding and appreciation of the underlying concepts of the present invention and in order not to obfuscate or distract from the teachings of the present invention.

Any reference in the specification to a method should be applied mutatis mutandis to a system capable of executing the method.

Any reference in the specification to a system should be applied mutatis mutandis to a method that may be executed by the system.

In the foregoing specification , the invention has been described with reference to specific examples of embodiments of the invention. It will , however , be evident that various modifications and changes may be made therein without departing from the broader spirit and scope of the invention as set forth in the appended claims.

Moreover , the terms "front ," "back ," "top ," "bottom ," "over ," "under" and the like in the description and in the claims , if any , are used for descriptive purposes and not necessarily for describing permanent relative positions. It is understood that the terms so used are interchangeable under appropriate circumstances such that the embodiments of the invention described herein are , for example , capable of operation in other orientations than those illustrated or otherwise described herein.

Any arrangement of components to achieve the same functionality is effectively "associated" such that the desired functionality is achieved. Hence , any two components herein combined to achieve a particular functionality may be seen as "associated with" each other such that the desired functionality is achieved, irrespective of architectures or intermedial components. Likewise , any two components so associated can also be viewed as being "operably connected ," or "operably coupled ," to each other to achieve the desired functionality.

However , other modifications , variations and alternatives are also possible. The specifications and drawings are , accordingly , to be regarded in an illustrative rather than in a restrictive sense.

In the claims , any reference signs placed between parentheses shall not be construed as limiting the claim. The word 'comprising' does not exclude the presence of other elements or steps then those listed in a claim. Furthermore , the terms "a" or "an ," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element , even when the same claim includes the introductory phrases "one or more" or "at least one" and indefinite articles such as "a" or "an." The same holds true for the use of definite articles. Unless stated otherwise , terms such as "first" and "second" are used to arbitrarily distinguish between the elements such terms describe. Thus , these terms are not necessarily intended to indicate temporal or other prioritization of such elements. The mere fact that certain measures are recited in mutually different claims does not indicate that a combination of these measures cannot be used to advantage.

While certain features of the invention have been illustrated and described herein , many modifications , substitutions , changes , and equivalents will now occur to those of ordinary skill in the art. It is , therefore , to be understood that the appended claims are intended to cover all such modifications and changes as fall within the true spirit of the invention.

## Claims

1. A system having a bearing cooling capabilities, system comprising:
a shaft;
a vertical electrical motor that is configured to rotate the shaft;
a housing comprising a first housing portion that surrounds the motor bearing ;
a motor bearing that comprises a stationary outer ring and a rotating inner ring that is mechanically coupled to the shaft;
an external heat dissipation element that is positioned outside the first housing portion;
heat pipes that are positioned between the stationary outer ring and the external heat dissipation element, wherein each heat pipe comprises an evaporator portion that is thermally coupled to the stationary outer ring and a condenser portion that is thermally coupled to the external heat dissipation element.

2. The system according to claim 1, wherein the heat pipes radially extend from the stationary outer ring.

3. The system according to claim 1, wherein the heat pipes pass through openings formed in the first housing portion.

4. The system according to claim 1, wherein a number of heat pipes exceeds six.

5. The system according to claim 1, wherein the external heat dissipation element is a ring-shaped thermal conductor.

6. The system according to claim 1, further comprising an internal heat dissipation element that surrounds the stationary outer ring.

7. The system according to claim 6, wherein the internal heat dissipation element is a ring.

8. The system according to claim 6, wherein the internal heat dissipation element is positioned between the stationary outer ring and the heat pipes.

9. The system according to claim 1, further comprising a heat sink that comprises cooling fins, wherein the heat pipe pass through the heat sink.

10. The system according to claim 1, further comprising an air based vertical electrical motor cooling unit.

11. A method for cooling a motor bearing, the method comprises:
rotating a shaft and a rotating inner ring of a motor bearing by a vertical electrical motor; wherein the vertical electrical motor is surrounded by a first housing portion of a housing; wherein the motor bearing further comprises a stationary outer ring; wherein the rotating inner ring is mechanically coupled to the shaft; and
cooling the motor bearing by heat pipes and an external heat dissipation element that is positioned outside the first housing portion; wherein the heat pipes are positioned between the stationary outer ring and the external heat dissipation element thermal, wherein each heat pipe comprises an evaporator portion that is thermally coupled to the stationary outer ring and a condenser portion that is thermally coupled to the external heat dissipation element.

12. The method according to claim 11, wherein the heat pipes radially extend from the stationary outer ring.

13. The method according to claim 11, wherein the heat pipes pass through openings formed in the first housing portion.

14. The method according to claim 11, wherein a number of heat pipes exceeds six.

15. The method according to claim 11, wherein the external heat dissipation element is a ring-shaped thermal conductor.
